# FASCICULE DE BREVET EUROPEEN

(11) **EP 3 607 644 B1**
(45) Date de publication et mention de la délivrance du brevet: **09.11.2022**
(21) Numéro de dépôt: 18718584.8
(22) Date de dépôt: 16.02.2018
(51) Int. Cl.: B60L 53/20, H02J 7/00, H02J 7/02, H02J 7/04, H02M 7/483, H02M 1/42, H02M 3/337, H02M 1/36

(54) **PROCEDE DE COMMANDE D'UN DISPOSITIF DE CHARGE EMBARQUE SUR UN VEHICULE ELECTRIQUE OU HYBRIDE**
VERFAHREN ZUR STEUERUNG EINER AUFLADEVORRICHTUNG AN BORD EINES ELEKTRO- ODER HYBRIDFAHRZEUGS
METHOD FOR CONTROLLING A CHARGING DEVICE ON BOARD AN ELECTRIC OR HYBRID VEHICLE

(30) Priorité: 04.04.2017 FR 1752877
(43) Date de publication de la demande: 12.02.2020
(73) Titulaire: Renault s.a.s, 92100 Boulogne Billancourt (FR); Nissan Motor Co., Ltd., Yokohama-shi, Kanagawa 221-0023 (JP)
(72) Inventeur: KVIESKA, Pedro, 78000 Versailles (FR); MERIENNE, Ludovic, 92190 Gif Sur Yvette (FR)
(74) Mandataire: Renault Group
(86) Numéro de dépôt international: PCT/FR2018/050373
(87) Numéro de publication internationale: WO 2018/185385

(56) Documents cités:
- GB-A- 2 530 494
- US-A1- 2011 279 101
- US-A1- 2012 250 360
- US-A1- 2012 262 955
- US-A1- 2013 003 431
- US-A1- 2014 091 718
- US-A1- 2016 141 951
- Texas Instruments: "TPS55010 2.95-V To 6-V Input, 2 W, Isolated DC/DC Converter with Integrated FETs", , 1 October 2014 (2014-10-01), pages 1-46, XP055570854, Retrieved from the Internet: URL:http://www.ti.com/lit/ds/symlink/tps55 010.pdf [retrieved on 2019-03-19]

## Description

La présente invention concerne un procédé de commande d'un dispositif de charge à entrée triphasée ou monophasée, comprenant un convertisseur AC-DC (courant alternatif - courant continu) isolé. Un tel dispositif de charge est particulièrement adapté pour une utilisation en tant que dispositif embarqué dans un véhicule automobile électrique ou hybride.

Ces véhicules sont équipés de batteries électriques haute tension et comprennent généralement des chargeurs embarqués, c'est-à-dire des dispositifs de charge des batteries électriques qui sont montés directement sur les véhicules. La fonction principale de ces dispositifs de charge est la recharge des batteries à partir de l'électricité disponible sur le réseau de distribution électrique. Ils assurent donc une conversion d'un courant alternatif en courant continu. Les critères recherchés pour les dispositifs de charge, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

On connaît des dispositifs de charge à entrée triphasée, c'est-à-dire qui sont capables de charger la batterie à partir d'un réseau d'alimentation électrique triphasé et des dispositifs de charge à entrée monophasée, c'est-à-dire qui sont capables de charger la batterie à partir d'un réseau d'alimentation électrique monophasé. Les dispositifs de charge à entrée triphasée présentent une puissance de charge supérieure relativement aux dispositifs de charge à entrée monophasée, avec une puissance par exemple de 22kW. Pour la connexion sur un réseau monophasé, plusieurs niveaux de puissance de charge peuvent être demandés, jusqu'à par exemple 7kW.

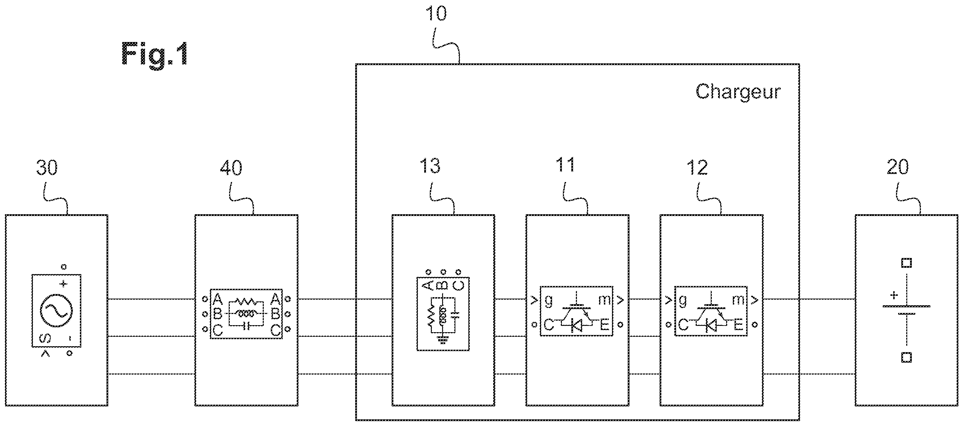

La figure 1 illustre une topologie connue d'un dispositif de charge 10 isolé, embarqué sur un véhicule électrique ou hybride pour la recharge de la batterie haute tension 20 du véhicule à partir d'un réseau d'alimentation électrique 30 auquel le dispositif de charge embarqué 10 est connecté par l'intermédiaire de l'impédance de ligne 40 du réseau.

Afin de mettre en œuvre la fonction de conversion AC-DC avec isolation galvanique, il est connu d'utiliser un dispositif de charge 10 comprenant un premier étage convertisseur AC-DC, qui comporte un circuit correcteur de facteur de puissance 11 (PFC, pour « Power factor Correction ») afin de limiter les harmoniques de courant d'entrée et un deuxième étage convertisseur DC-DC (courant continu - courant continu) 12, pour assurer la régulation de la charge et également pour assurer la fonction d'isolation pour la sécurité d'utilisation. Un filtre d'entrée 13 est classiquement intégré en entrée du dispositif de charge embarqué 10, en amont du circuit PFC 11 par rapport au réseau électrique 30.

Le circuit PFC 11 est géré par un contrôleur intégré (non représenté), qui analyse et corrige en temps réel l'allure du courant par rapport à la tension. Il en déduit les erreurs de forme par comparaison avec la sinusoïde redressée de la tension et il les corrige en contrôlant la quantité d'énergie grâce à un découpage haute fréquence et un stockage d'énergie dans une inductance. Son rôle est plus précisément d'obtenir un courant non déphasé et le plus sinusoïdal possible en entrée de l'alimentation du chargeur.

Pour le circuit PFC, il est possible de mettre en œuvre un redresseur triphasé trois niveaux à trois interrupteurs, communément connu sous le nom de redresseur triphasé de Vienne. Le choix de cette topologie est en effet particulièrement avantageux du point de vue des performances pour la correction de facteur de puissance.

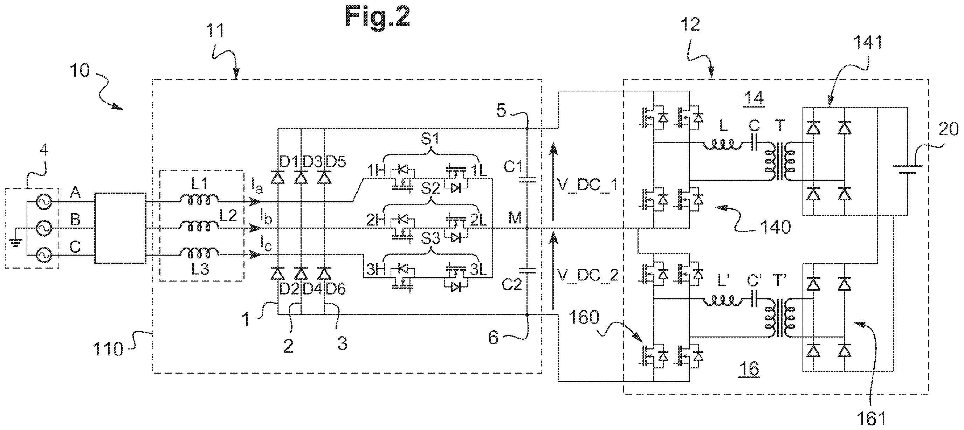

En référence, à la figure 2, l'étage redresseur PFC 11 du type redresseur triphasé de Vienne 110 comprend trois connexions de phase entrantes parallèles A, B, C couplées chacune à une phase d'un réseau d'alimentation électrique triphasé, et reliée chacune à une paire d'interrupteurs S1, S2, S3 formant un bras de commutation du redresseur triphasé de Vienne par l'intermédiaire d'une bobine d'inductance en série L1, L2, L3. Un filtre d'entrée 13 est disposé en amont des inductances L1, L2, L3 sur chaque phase.

Chaque paire d'interrupteurs S1, S2, S3 comprend un montage série constitué d'un premier interrupteur correspondant 1H, 2H, 3H, qui est piloté quand un courant d'entrée correspondant la, Ib, Ic est positif, et d'un second interrupteur correspondant 1L, 2L, 3L qui est piloté quand le courant d'entrée correspondant est négatif. Les interrupteurs sont formés par des composants semi-conducteurs commandés à la fermeture et à l'ouverture, tel que par exemple des transistors MOS (acronyme anglais pour « Metal Oxide Semiconductor »), connectés en antiparallèle avec une diode. Les interrupteurs 1H, 2H, 3H sont également nommés interrupteurs haut et les interrupteurs 1L, 2L, 3L interrupteurs bas.

Le redresseur triphasé de Vienne comprend aussi trois branches parallèles 1, 2 et 3, comportant chacune deux diodes D1 et D2, D3 et D4 et D5 et D6, qui forment un pont triphasé à six diodes permettant de redresser le courant et la tension prélevés à partir d'un réseau d'alimentation électrique 4 triphasé. Chaque entrée du redresseur triphasé de Vienne est connectée, par une connexion entrante parallèle respective, à un point de connexion situé entre deux diodes d'une même branche 1, 2 et 3.

Les deux extrémités communes des branches 1, 2 et 3 constituent deux bornes de sorties 5 et 6, respectivement positive et négative, du redresseur triphasé de Vienne. Les bras de commutation S1, S2, S3 de chaque phase sont par ailleurs connectés chacun respectivement entre le point de connexion situé entre les deux diodes des première, deuxième et troisième branches 1, 2 et 3 et un point milieu M du redresseur triphasé. Un premier condensateur de sortie C1 est connecté entre le point milieu M et la borne de sortie positive 5 et un deuxième condensateur de sortie C2 est connecté entre le point milieu M et la borne de sortie négative 6 pour supporter des tensions de sortie respectivement V_DC_1 et V_DC_2 fournies en sortie du redresseur triphasé de Vienne, sur des bus continu d'alimentation respectifs reliant l'étage redresseur à l'étage convertisseur.

L'étage convertisseur DC-DC 12 connecté en sortie du redresseur triphasé de Vienne 110 est prévu pour évacuer l'énergie stockée dans les condensateurs C1, C2 vers la batterie 20. Il est composé de deux circuits DC-DC 14 et 16, connectés respectivement sur chaque condensateur de sortie C1, C2 de l'étage redresseur triphasé. La topologie retenue pour chaque circuit DC-DC 14, 16 composant l'étage convertisseur 12 est celle d'un convertisseur LLC résonant. Aussi, un premier convertisseur LLC résonant 14 est connecté entre le point haut du condensateur de sortie C1 et le point milieu M et un deuxième convertisseur LLC résonant 16 est connecté entre le point milieu M et le point bas du condensateur de sortie C2.

Plus précisément, le premier convertisseur LLC résonant 14 comprend un ensemble d'interrupteurs 140, tels que des transistors MOS, monté en pont complet, connecté en entrée entre le point haut du condensateur de sortie C1 et le point milieu M et en sortie, en série, à un circuit résonnant L, C et au primaire d'un transformateur T, le secondaire du transformateur étant relié à un pont de diodes 141, ce dernier étant relié à la batterie 20, éventuellement par l'intermédiaire d'un filtre de sortie. De la même façon, le deuxième convertisseur LLC résonant 16 comprend un ensemble d'interrupteurs 160, tels que des transistors MOS, monté en pont complet, connecté en entrée entre le point bas du condensateur de sortie C2 et le point milieu M et en sortie, en série, à un circuit résonnant L', C' et au primaire d'un transformateur T', le secondaire du transformateur étant relié à un pont de diodes 161, ce dernier étant également relié à la batterie 20, éventuellement par l'intermédiaire d'un filtre de sortie.

En termes de régulation, suivant l'état de l'art d'un tel dispositif de charge 10 à deux niveaux avec l'étage redresseur PFC 11 et l'étage convertisseur DC-DC 12 comme illustré à la figure 2, la commande de l'étage redresseur PFC est prévue pour permettre de réguler la tension fournie à l'étage convertisseur DC-DC, et pour imposer une forme sinusoïdale au courant d'entrée. Le courant envoyé à l'étage convertisseur DC-DC est prévu pour être constant (avec une certaine valeur de fluctuation (« ripple » selon une terminologie anglo-saxonne)). La commande de l'étage convertisseur DC-DC 12 est quant à elle prévue pour permettre de réguler la tension de sortie du dispositif de charge. Ici, la tension de sortie est imposée. En effet, lorsque l'on recharge la batterie 20, la tension de batterie est imposée et varie en fonction de son état de charge, cela nécessite en temps réel que l'étage convertisseur DC-DC 12 régule la puissance envoyée à la charge. Pour ce faire, les circuits convertisseurs résonant LLC 14 et 16 composant l'étage convertisseur DC-DC 12, adaptent leur gain pour permettre de convertir la tension d'entrée, soit la tension sur les deux condensateurs de sortie C1, C2 de l'étage redresseur PFC vers la tension de batterie. Cette adaptation du gain se fait en faisant travailler les interrupteurs du pont complet associé au primaire à rapport cyclique fixe (50%) et fréquence variable.

Le document US 2016/0079862 fait connaître une méthode de régulation de la tension de sortie d'un convertisseur DC-DC de type LLC, suivant laquelle, dans un premier mode de commande, on ajuste la fréquence de commutation du pont d'interrupteurs en entrée du convertisseur LLC pour assurer une tension de sortie comprise entre deux bornes, puis, lorsqu'une tension maximale est atteinte, dans un deuxième mode de commande, on ajuste le rapport de cyclique de commande des interrupteurs.

Ce document concerne donc la régulation de la tension en sortie d'un convertisseur DC-DC de type LLC, comme celui mis en œuvre dans le dispositif de charge à deux niveaux illustré à la figure 2. Cependant, plutôt que d'asservir la tension de sortie du convertisseur DC-DC, il est fait le choix dans la présente demande d'asservir la tension d'entrée du convertisseur DC-DC, soient les tensions sur les condensateurs de sortie C1, C2 du redresseur PFC, par le convertisseur DC-DC. Autrement dit, nous partons du principe que la régulation des tensions sur les condensateurs de sortie de l'étage redresseur PFC est réalisée par l'étage DC-DC, prévu pour évacuer l'énergie stockée dans ces condensateurs vers la batterie.

Le document US2012/262955A1 divulgue un circuit de conversion électrique connecté en entrée à plusieurs sources de tension en série, chacune connectée à un module convertisseur résonnant, les convertisseurs résonnants étant connectés en parallèle sur la tension de sortie. La tension d'entrée de chaque module est régulée entre différents niveaux de tension par un circuit d'interrupteurs reliant les sources d'entrée aux modules convertisseurs résonnants.

Le document US2013/003431A1 divulgue un circuit de conversion électrique comportant un module redresseur Vienna, connecté à un circuit d'équilibrage lui-même connecté à plusieurs modules résonnants connectés en parallèle à la tension de sortie. Le circuit d'équilibrage permet d'équilibrer les courants de sortie au niveau des modules convertisseurs résonnants.

Le document US2014/091718A1 divulgue un circuit de conversion comportant un module redresseur connecté à un circuit résonnant, dans lequel le courant de sortie est régulé par un contrôle en modulation à largeur d'impulsion sur la tension redressée en sortie du module redresseur.

Aussi, dans ce contexte, il existe un besoin pour une stratégie de commande de l'étage convertisseur DC-DC permettant d'asservir à une valeur constante la tension des condensateurs de sortie de l'étage redresseur PFC.

Conformément à l'invention, ce but est atteint par un procédé de commande d'un dispositif de charge d'une batterie de véhicule selon la revendication 1.

L'invention concerne également un dispositif de charge d'une batterie de véhicule selon la revendication 5. Des aspects avantageux de l'invention sont définis par les revendications dépendantes.

D'autres particularités et avantages de l'invention ressortiront à la lecture de la description faite ci-après d'un mode de réalisation particulier de l'invention, donné à titre indicatif mais non limitatif, en référence aux figures suivantes dans lesquelles :
- la figure 1 illustre de façon schématique une topologie connue d'un dispositif de charge de batterie destiné à être embarqué sur un véhicule automobile électrique ou hybride ;
- la figure 2 illustre de façon schématique un dispositif de charge à deux niveaux composé d'un redresseur triphasé de Vienne en entrée avec deux condensateurs de sortie, sur chacun desquels est connecté un convertisseur continu-continu de type convertisseur résonant LLC, et sur lequel est mis en œuvre le procédé de commande selon l'invention ;
- la figure 3 est un schéma illustrant la topologie de la commande en fréquence utilisée pour chaque circuit convertisseur résonant LLC de la figure 2.

La description qui suit sera faite en référence à la commande d'un seul circuit convertisseur résonant LLC de l'étage convertisseur DC-DC 12 de la figure 2, couplé à un seul condensateur de sortie, dans la mesure où la commande de l'autre circuit convertisseur résonnant LLC constituant l'étage convertisseur DC-DC 12 sera identique.

Le circuit convertisseur résonant LLC comporte un pont de diodes couplé au secondaire du transformateur. Aussi, il n'est pas réversible. Autrement dit, le transfert de puissance ne peut se faire que de l'entrée vers la sortie du circuit convertisseur résonant LLC. Ainsi, la commande de ce circuit convertisseur résonant LLC peut permettre d'évacuer vers la batterie l'énergie stockée dans le condensateur auquel le circuit convertisseur résonant LLC est couplé en entrée, de sorte à diminuer la tension aux bornes de ce condensateur, mais par contre, elle ne peut pas être adaptée pour permettre d'augmenter la tension aux bornes de ce condensateur.

Aussi, le principe de la commande sera d'adapter la fréquence de commutation du pont d'interrupteurs en entrée du circuit convertisseur résonant LLC, de façon à permettre de transférer vers la batterie l'énergie stockée dans le condensateur couplé en entrée du circuit convertisseur résonant LLC lorsque la tension mesurée aux bornes de ce condensateur est supérieure à une tension de consigne, et de ne pas le faire lorsque cette tension est inférieure à la tension de consigne. Dans ce dernier cas, où l'énergie du condensateur n'est pas évacuée par la commande du circuit convertisseur résonant LLC, le condensateur est chargé par l'étage redresseur PFC en amont. Autrement dit, la commande en fréquence du circuit convertisseur résonant LLC est telle qu'elle permet d'une part, de vider le condensateur couplé en entrée en évacuant l'énergie stockée dans celui-ci vers la batterie, quand l'écart entre la tension aux bornes de ce condensateur et la tension de consigne est positif et, d'autre part, de remplir le condensateur en n'évacuant pas d'énergie vers la batterie quand cet écart est négatif. De la sorte, la grandeur commandée, à savoir la tension aux bornes du condensateur de sortie de l'étage redresseur PFC couplé en entrée du circuit convertisseur résonant LLC, est toujours maintenue sensiblement autour de la tension de consigne grâce à la commande en fréquence du circuit convertisseur résonant LLC.

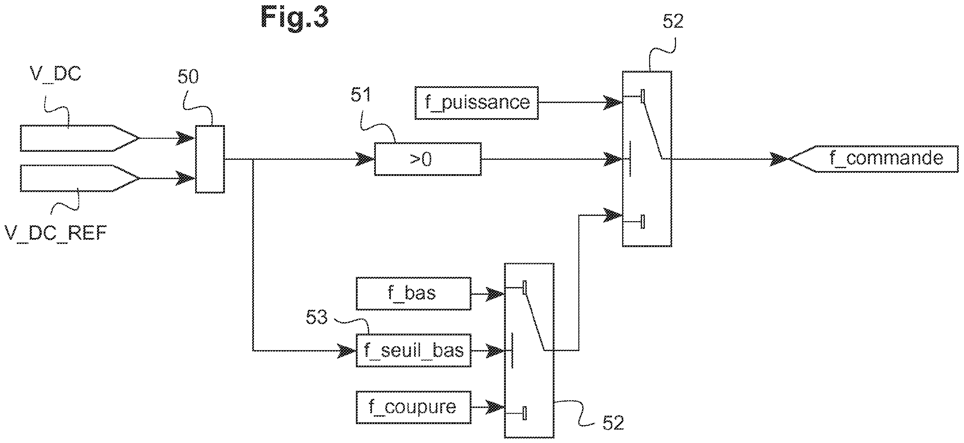

La figure 3 illustre la topologie de la commande en fréquence du circuit convertisseur résonant LLC selon les principes exposés ci-dessus.

Le dispositif de commande du circuit convertisseur résonant LLC, destiné à asservir la tension du condensateur de sortie de l'étage redresseur couplé en entrée du circuit convertisseur résonant LLC, est par exemple mis en œuvre par un microcontrôleur équipé d'un comparateur 50. Le condensateur de sortie de l'étage redresseur PFC associé au circuit convertisseur résonant LLC est couplé à un moyen de mesure de la tension aux bornes du condensateur. La mesure de la tension V_DC aux bornes du condensateur de sortie est fournie à une entrée du comparateur 50 dont l'autre entrée est reliée à une tension de consigne V_DC_REF de la régulation. Le signal de sortie du comparateur 50 est un signal indicatif de la différence entre la mesure de la tension aux bornes du condensateur de sortie et cette tension de consigne. Le microcontrôleur exploite le signal de différence généré par le comparateur 50 pour fixer la fréquence de commutation f_commande des interrupteurs de l'ensemble d'interrupteurs couplé au primaire du circuit convertisseur résonant LLC concerné, en fonction notamment du signe de cette différence.

Pour ce faire, le signal de différence est fourni à un premier moyen de décision 51 comprenant une bascule, destiné à décider du signe de cette différence. Si cette différence est supérieure à zéro, autrement dit tant que la tension aux bornes du condensateur de sortie de l'étage redresseur couplé en entrée du circuit convertisseur résonant LLC est supérieure à la tension de consigne, un moyen de détermination 52 fixe la fréquence de commutation f_commande à une première valeur de fréquence f_puissance, qui est adaptée à faire travailler les interrupteurs de l'ensemble d'interrupteurs couplé au primaire du circuit convertisseur résonant LLC de façon à transmettre l'énergie stockée dans le condensateur de sortie vers la batterie. Autrement dit, on applique une fréquence de commutation f_puissance apte à transmettre de la puissance à la batterie. On fixe cette fréquence de commutation f_puissance des interrupteurs à la fréquence de résonance du circuit convertisseur résonant LLC.

Par contre, si la différence entre la mesure de la tension aux bornes du condensateur de sortie et la tension de consigne est inférieure à zéro, on peut choisir de fixer en tant que fréquence de commutation f_commande, une deuxième valeur de fréquence, dite fréquence de coupure f_coupure, potentiellement égale à zéro, de façon à ne pas transmettre d'énergie à la batterie.

On fixe donc la fréquence de commutation f_puissance comme étant la fréquence de résonance du circuit convertisseur lorsque la mesure de la tension aux bornes du condensateur est supérieure à la tension de consigne et on coupe la transmission de puissance vers la batterie via la commande en fréquence à f_coupure lorsque la mesure est inférieure à la tension de consigne.

Toutefois, si la différence entre la mesure de la tension aux bornes du condensateur de sortie et la tension de consigne est inférieure à zéro, un deuxième moyen de décision 53 intervient, qui est destiné à décider si cette différence inférieure à zéro est néanmoins supérieure à un seuil prédéfini seuil_bas (i.e. cette différence en valeur absolue est inférieure au seuil prédéfini seuil_bas). Si tel est le cas, le moyen de détermination 52 fixe la fréquence de commutation f_commande à une troisième valeur de fréquence f_bas prévue pour transmettre un peu de puissance et ce, tant que la différence entre la mesure de la tension aux bornes du condensateur de sortie et la tension de consigne est supérieure à ce seuil. Pour la valeur de fréquence f_bas, on choisit préférentiellement une fréquence de commutation apte générer en sortie du circuit convertisseur une tension légèrement inférieure à la tension de batterie. Cela présente l'avantage de générer une commande qui a une plus petite excursion fréquentielle et de garder les éléments du circuit convertisseur magnétisés.

Par contre, si la tension aux bornes du condensateur de sortie continue de chuter, autrement dit si la deuxième valeur de fréquence f_bas fixée en tant que fréquence de commutation ne suffit pas stopper le flux de puissance, lorsque la différence entre cette tension et la tension de consigne devient inférieure au seuil prédéfini seuil_bas, on fixe la fréquence de commutation f_commande à la deuxième valeur de fréquence f_coupure, soit la fréquence nulle, de façon à interrompre complètement l'envoi de puissance à la batterie et à limiter de plus la consommation du circuit convertisseur.

Ce mode de réalisation consiste donc à envoyer un peu de puissance à la batterie lorsque la tension aux bornes du condensateur de sortie baisse, via la commande en fréquence qui fixe la fréquence de commutation du circuit convertisseur à f_bas, avant de couper complètement l'envoi de puissance, via la commande en fréquence qui fixe la fréquence de commutation à f_coupure. La fréquence de commutation f_bas permet avantageusement d'assurer la continuité du courant envoyé à la batterie avant la coupure.

On effectue en outre un contrôle d'hystérésis pour chacune des transitions de la fréquence de commutation f_commande. Le contrôle d'hystérésis est réalisé en comparant la différence entre la mesure de la tension aux bornes du condensateur de sortie et la tension de consigne à des valeurs de seuil d'hystérésis pour chaque transition. Par exemple, pour la comparaison par rapport à zéro, mise en œuvre par le moyen de décision 51, on bascule vers le niveau logique haut lorsque le signal de différence est à +5V pour la commande en fréquence de f_puissance et on bascule vers le niveau logique bas lorsque le signal de différence est à -5V pour la commande en fréquence de f_coupure ou f_bas. Pour la comparaison par rapport au seuil prédéfini seuil_bas, mise en œuvre par le moyen de décision 53, on bascule vers le niveau logique haut lorsque le signal de différence est à -10V pour la commande en fréquence de f_bas et on bascule vers le niveau logique bas lorsque le signal de différence est à -15V pour la commande en fréquence de f_coupure.

A titre d'exemple, soit le point de fonctionnement suivant défini par une tension de consigne fixée à 450V, une tension de batterie égale à 350V et une puissance de charge à 7 KW, on peut utiliser les valeurs suivantes pour le réglage des différentes valeurs de fréquence de commutation f_commande de l'ensemble de commutateurs en entrée du circuit redresseur résonant LLC :
f_puissance = 55 KHz
f_bas = 90 KHz
f_coupure = 0 Hz.

La commande du circuit redresseur nécessite seulement trois valeurs de fréquence qui sont utilisées pour chaque point de fonctionnement.

## Revendications

1. Procédé de commande d'un dispositif de charge (10) d'une batterie (20) de véhicule automobile, le dispositif de charge comprenant un étage redresseur (11) assurant une fonction de correction de facteur de puissance, ledit étage redresseur étant connecté en entrée à un réseau d'alimentation électrique et comportant deux bus continu d'alimentation en sortie sur chacun desquels est connecté un condensateur de sortie (C1, C2), chaque condensateur de sortie étant couplé en entrée à un circuit convertisseur résonant LLC (14, 16) d'un étage convertisseur continu-continu (12) connecté à la batterie, chaque circuit convertisseur résonant LLC (14, 16) comprenant un ensemble d'interrupteurs (140, 160) connecté en entrée à l'un des condensateurs de sortie (C1, C2) de l'étage redresseur (11) et en sortie en série à un circuit résonant (L, C) et au premier enroulement d'un transformateur (T), le deuxième enroulement du transformateur étant relié à un pont de diodes (141) relié à la batterie (20), ledit procédé étant **caractérisé en ce qu'**il comprend les étapes suivantes, pour chaque circuit convertisseur résonant LLC :
- on compare une mesure de tension (V_DC) aux bornes du condensateur de sortie couplé en entrée du circuit convertisseur résonant LLC à une tension de consigne (V_DC_REF),
- on fixe la fréquence de commutation (f_commande) des interrupteurs dudit ensemble d'interrupteurs en fonction du signe de la différence entre la mesure de la tension aux bornes du condensateur de sortie et la tension de consigne, plus précisément :
- on détermine si la différence entre la mesure de la tension aux bornes du condensateur de sortie et la tension de consigne est supérieure à zéro,
- si c'est le cas, on fixe la fréquence de commutation à une première valeur de fréquence (f_puissance) adaptée à faire travailler les interrupteurs dudit ensemble de façon à transmettre l'énergie stockée dans le condensateur de sortie vers la batterie au moyen dudit circuit résonant LLC, et
- sinon, dans le cas où la différence entre la mesure de la tension aux bornes du condensateur de sortie et la tension de consigne devient inférieure à zéro, on fixe la fréquence de commutation à une troisième valeur de fréquence (f_bas) supérieure à ladite première valeur de fréquence (f_puissance) tant que ladite différence en valeur absolue est inférieure à un seuil (seuil_bas) et on fixe la fréquence de commutation à une deuxième valeur de fréquence (f_coupure) lorsque ladite différence en valeur absolue devient supérieure audit seuil, ladite deuxième valeur de fréquence (f_coupure) étant adaptée pour couper tout transfert d'énergie du condensateur de sortie vers la batterie.

2. Procédé selon la revendication 1, **caractérisé en ce que** ladite première valeur de fréquence (f_puissance) correspond à la fréquence de résonance du circuit résonant LLC.

3. Procédé selon l'une quelconque des revendications 1 à 2, **caractérisé en ce que** ladite deuxième valeur de fréquence (f_coupure) est la fréquence nulle.

4. Procédé selon l'une quelconque des revendications précédentes, **caractérisé en ce qu'**on effectue un contrôle d'hystérésis pour chaque transition de la fréquence de commutation.

5. Dispositif de charge (10) d'une batterie (20) de véhicule automobile, le dispositif de charge comprenant un étage redresseur (11) assurant une fonction de correction de facteur de puissance, ledit étage redresseur étant configuré pour être connecté en entrée à un réseau d'alimentation électrique et comportant deux bus continu d'alimentation en sortie sur chacun desquels est connecté un condensateur de sortie (C1, C2), chaque condensateur de sortie étant couplé en entrée à un circuit convertisseur résonant LLC (14, 16) d'un étage convertisseur continu-continu (12) configuré pour être connecté à la batterie, chaque circuit convertisseur résonant LLC (14, 16) comprenant un circuit résonant (L, C), un transformateur (T), un pont de diodes (141), et un ensemble d'interrupteurs (140, 160) connecté en entrée à l'un des condensateurs de sortie (C1, C2) de l'étage redresseur (11) et en sortie en série au circuit résonant (L, C) et à un premier enroulement du transformateur (T), un deuxième enroulement du transformateur étant relié au pont de diodes (141) qui est configuré pour être relié à la batterie (20), ledit dispositif de charge comportant un dispositif de commande, le dispositif de charge étant **caractérisé en ce que** le dispositif de commande comprend un module de commande indépendant pour chaque circuit résonant LLC comprenant un moyen de comparaison (50) adapté à recevoir une mesure de tension (V_DC) aux bornes du condensateur de sortie couplé en entrée du circuit convertisseur résonant LLC et une tension de consigne (V_DC_REF), le module de commande étant adapté à fixer la fréquence de commutation (f_commande) des interrupteurs dudit ensemble d'interrupteurs en fonction du signe de la différence entre la mesure de la tension aux bornes du condensateur de sortie et la tension de consigne, le module de commande comprenant un moyen de détermination (52) apte à fixer la fréquence de commutation à une première valeur de fréquence (f_puissance) adaptée à faire travailler les interrupteurs dudit ensemble de façon à transmettre l'énergie stockée dans le condensateur de sortie vers la batterie au moyen dudit circuit résonant LLC si ladite différence est supérieure à zéro et, lorsque la différence entre la mesure de la tension aux bornes du condensateur de sortie et la tension de consigne devient inférieure à zéro, le moyen de détermination (52) est apte à :
- fixer la fréquence de commutation à une troisième valeur de fréquence (f_bas) supérieure à ladite première valeur de fréquence (f_puissance) tant que ladite différence en valeur absolue est inférieure à un seuil (seuil_bas) et
- fixer la fréquence de commutation à une deuxième valeur de fréquence (f_coupure) lorsque ladite différence en valeur absolue devient supérieure audit seuil, ladite deuxième valeur de fréquence (f_coupure) étant adaptée pour couper tout transfert d'énergie du condensateur de sortie vers la batterie.

6. Véhicule automobile électrique ou hybride comprenant une batterie haute tension, **caractérisé en ce qu'**il comprend un dispositif de charge embarqué selon la revendication 5, apte à charger la batterie à partir d'un réseau d'alimentation électrique.

## Patentansprüche

1. Verfahren zur Steuerung einer Aufladevorrichtung (10) für eine Batterie (20) eines Kraftfahrzeugs, wobei die Aufladevorrichtung eine Gleichrichterstufe (11) umfasst, die eine Korrekturfunktion für den Leistungsfaktor sicherstellt, wobei die Gleichrichterstufe am Eingang eines elektrischen Versorgungsnetzes angeschlossen ist und zwei Gleichstromversorgungsleitungen umfasst, an deren Ausgang jeweils ein Ausgangskondensator (C1, C2) angeschlossen ist, wobei jeder Ausgangskondensator mit dem Eingang einer LLC-Resonanzwandlerschaltung (14, 16) einer an die Batterie angeschlossene Gleichspannungswandlerstufe (12) verbunden ist, wobei jede LLC-Resonanzwandlerschaltung (14, 16) eine Gruppe von Schaltern (140, 160) umfasst, die am Eingang eines der Ausgangskondensatoren (C1, C2) der Gleichrichterstufe (11) und am Ausgang in Reihenschaltung an einen Resonanzschaltkreis (L, C) und an die erste Wicklung eines Transformators (T) angeschlossen ist, wobei die zweite Wicklung des Transformators mit einer mit der Batterie (20) verbundenen Diodenbrücke (141) verbunden ist, wobei das Verfahren **dadurch gekennzeichnet ist, dass** es die folgenden Schritte für jede LLC-Resonanzwandlerschaltung umfasst:
- Vergleichen eines Spannungsmesswertes (V DC) an den Anschlüssen des Ausgangskondensators, der am Eingang der LLC-Resonanzwandlerschaltung angeschlossen ist, mit einer Sollspannung (V_DC_REF),
- Festlegen der Umschaltfrequenz (f_Steuerung) der Schalter der Gruppe von Schaltern in Abhängigkeit vom Vorzeichen der Differenz zwischen dem Spannungsmesswert an den Anschlüssen des Ausgangskondensators und der Sollspannung, genauer:
- Feststellen, ob die Differenz zwischen dem Spannungsmesswert an den Anschlüssen des Ausgangskondensators und der Sollspannung größer als null ist,
- wenn dies der Fall ist, Festlegen der Umschaltfrequenz auf einen ersten Frequenzwert (f_Leistung), der geeignet ist, die Schalter der Gruppe so arbeiten zu lassen, dass sie die im Ausgangskondensator gespeicherte Energie mithilfe der LLC-Resonanzwandlerschaltung an die Batterie übertragen, und
- andernfalls, in dem Fall, in dem die Differenz zwischen dem Spannungsmesswert an den Anschlüssen des Ausgangskondensators und der Sollspannung kleiner als null wird, Festlegen der Umschaltfrequenz auf einen dritten Frequenzwert (f_niedrig), der größer ist als der erste Frequenzwert (f_Leistung), solange die Absolutwertdifferenz kleiner als ein Schwellenwert (niedriger _Schwellenwert) ist, und Festlegen der Umschaltfrequenz auf einen zweiten Frequenzwert (f_Abschaltung), wenn die Absolutwertdifferenz größer wird als der Schwellenwert, wobei der zweite Frequenzwert (f_Abschaltung) geeignet ist, jegliche Übertragung von Energie des Ausgangskondensators an die Batterie abzuschalten.

2. Verfahren nach Anspruch 1, **dadurch gekennzeichnet, dass** der erste Frequenzwert (f_Leistung) der Resonanzfrequenz der LLC-Resonanzschaltung entspricht.

3. Verfahren nach einem der Ansprüche 1 bis 2, **dadurch gekennzeichnet, dass** der zweite Frequenzwert (f_Abschaltung) die Frequenz null ist.

4. Verfahren nach einem der vorhergehenden Ansprüche, **dadurch gekennzeichnet, dass** eine Hysteresesteuerung für jeden Übergang der Umschaltfrequenz durchgeführt wird.

5. Aufladevorrichtung (10) für eine Batterie (20) eines Kraftfahrzeugs, wobei die Aufladevorrichtung eine Gleichrichterstufe (11) umfasst, die eine Korrekturfunktion für den Leistungsfaktor sicherstellt, wobei die Gleichrichterstufe dazu konfiguriert ist, am Eingang eines elektrischen Versorgungsnetzes angeschlossen zu werden und zwei Gleichstromversorgungsleitungen umfasst, an deren Ausgang jeweils ein Ausgangskondensator (C1, C2) angeschlossen ist, wobei jeder Ausgangskondensator mit dem Eingang einer LLC-Resonanzwandlerschaltung (14, 16) einer Gleichspannungswandlerstufe (12) verbunden ist, die dazu konfiguriert ist, an die Batterie angeschlossen zu werden, wobei jede LLC-Resonanzwandlerschaltung (14, 16) einen Resonanzschaltkreis (L, C), einen Transformator (T), eine Diodenbrücke (141) und eine Gruppe von Schaltern (140, 160) umfasst, die am Eingang eines der Ausgangskondensatoren (C1, C2) der Gleichrichterstufe (11) und am Ausgang in Reihenschaltung an den Resonanzschaltkreis (L, C) und an eine erste Wicklung des Transformators (T) angeschlossen ist, wobei eine zweite Wicklung des Transformators mit der Diodenbrücke (141) verbunden ist, die dazu konfiguriert ist, mit der Batterie (20) verbunden zu werden, wobei die Aufladevorrichtung eine Steuervorrichtung umfasst, wobei die Aufladevorrichtung **dadurch gekennzeichnet ist, dass** die Steuervorrichtung ein für jede LLC-Resonanzschaltung unabhängiges Steuermodul umfasst, das ein Vergleichsmittel (50) umfasst, das geeignet ist, einen Spannungsmesswert (V_DC) an den Anschlüssen des mit dem Eingang der LLC-Resonanzwandlerschaltung verbundenen Ausgangskondensators und eine Sollspannung (V_DC_REF) zu empfangen, wobei das Steuermodul geeignet ist, die Umschaltfrequenz (f_Steuerung) der Schalter der Gruppe von Schaltern in Abhängigkeit vom Vorzeichen der Differenz zwischen dem Spannungsmesswert an den Anschlüssen des Ausgangskondensators und der Sollspannung festzulegen, wobei das Steuermodul ein Festlegungsmittel (52) umfasst, das fähig ist, die Umschaltfrequenz auf einen ersten Frequenzwert (f_Leistung) festzulegen, der geeignet ist, die Schalter der Gruppe so arbeiten zu lassen, dass sie die im Ausgangskondensator gespeicherte Energie mithilfe der LLC-Resonanzwandlerschaltung an die Batterie übertragen, wenn die Differenz größer als null ist, und wenn die Differenz zwischen dem Spannungsmesswert an den Anschlüssen des Ausgangskondensators und der Sollspannung kleiner als null wird, das Festlegungsmittel (52) zu Folgendem fähig ist:
- Festlegen der Umschaltfrequenz auf einen dritten Frequenzwert (f_niedrig), der größer ist als der erste Frequenzwert (f_Leistung), solange die Absolutwertdifferenz kleiner als ein Schwellenwert (niedriger_Schwellenwert) ist, und
- Festlegen der Umschaltfrequenz auf einen zweiten Frequenzwert (f Abschaltung), wenn die Absolutwertdifferenz größer wird als der Schwellenwert, wobei der zweite Frequenzwert (f_Abschaltung) geeignet ist, jegliche Übertragung von Energie des Ausgangskondensators an die Batterie abzuschalten.

6. Elektro- oder Hybridfahrzeug, das eine Hochspannungsbatterie umfasst, **dadurch gekennzeichnet, dass** es an Bord eine Aufladevorrichtung nach Anspruch 5 umfasst, die geeignet ist, die Batterie aus einem elektrischen Versorgungsnetz aufzuladen.

## Claims

1. Method for controlling a device (10) for charging a motor vehicle battery (20), the charging device comprising a rectifier stage (11) providing a power factor correction function, said rectifier stage being connected at input to an electricity supply grid and including two DC supply buses at output, to each of which an output capacitor (C1, C2) is connected, each output capacitor being coupled at input to an LLC resonant converter circuit (14, 16) of a DC-to-DC converter stage (12) connected to the battery, each LLC resonant converter circuit (14, 16) comprising a set of switches (140, 160) connected at input to one of the output capacitors (C1, C2) of the rectifier stage (11) and at output in series to a resonant circuit (L, C) and to the first winding of a transformer (T), the second winding of the transformer being linked to a diode bridge (141) linked to the battery (20), said method being **characterized in that** it comprises the following steps, for each LLC resonant converter circuit:
- a measured voltage (V_DC) across the terminals of the output capacitor coupled at the input of the LLC resonant converter circuit is compared with a setpoint voltage (V_DC_REF),
- the switching frequency (f_control) of the switches of said set of switches is set depending on the sign of the difference between the measurement of the voltage across the terminals of the output capacitor and the setpoint voltage; more specifically:
- it is determined whether the difference between the measurement of the voltage across the terminals of the output capacitor and the setpoint voltage is higher than zero,
- if this is the case, the switching frequency is set to a first frequency value (f_power) designed to make the switches of said set operate so as to transmit the energy stored in the output capacitor to the battery by way of said LLC resonant circuit, and
- if not, if the difference between the measurement of the voltage across the terminals of the output capacitor and the setpoint voltage becomes lower than zero, the switching frequency is set to a third frequency value (f_low) higher than said first frequency value (f_power) for as long as said difference in absolute value is lower than a threshold (low_threshold), and the switching frequency is set to a second frequency value (f_cutoff) when said difference in absolute value becomes higher than said threshold, said second frequency value (f_cutoff) being designed to cut off any transfer of energy from the output capacitor to the battery.

2. Method according to Claim 1, **characterized in that** said first frequency value (f_power) corresponds to the resonant frequency of the LLC resonant circuit.

3. Method according to either one of Claims 1 to 2, **characterized in that** said second frequency value (f_cutoff) is the zero frequency.

4. Method according to any one of the preceding claims, **characterized in that** hysteresis control is performed for each transition of the switching frequency.

5. Device (10) for charging a motor vehicle battery (20), the charging device comprising a rectifier stage (11) providing a power factor correction function, said rectifier stage being configured to be connected at input to an electricity supply grid and including two DC supply buses at output, to each of which an output capacitor (C1, C2) is connected, each output capacitor being coupled at input to an LLC resonant converter circuit (14, 16) of a DC-to-DC converter stage (12) configured to be connected to the battery, each LLC resonant converter circuit (14, 16) comprising a resonant circuit (L, C), a transformer (T), a diode bridge (141), and a set of switches (140, 160) connected at input to one of the output capacitors (C1, C2) of the rectifier stage (11) and at output in series to the resonant circuit (L, C) and to a first winding of the transformer (T), a second winding of the transformer being linked to the diode bridge (141), which is configured to be linked to the battery (20), said charging device comprising a control device, the charging device being **characterized in that** the control device comprises an independent control module for each LLC resonant circuit comprising a comparison means (50) designed to receive a measured voltage (V_DC) across the terminals of the output capacitor coupled at the input of the LLC resonant converter circuit and a setpoint voltage (V_DC_REF), the control module being designed to set the switching frequency (f_control) of the switches of said set of switches depending on the sign of the difference between the measurement of the voltage across the terminals of the output capacitor and the setpoint voltage, the control module comprising a determination means (52) able to set the switching frequency to a first frequency value (f_power) designed to make the switches of said set operate so as to transmit the energy stored in the output capacitor to the battery by way of said LLC resonant circuit if said difference is higher than zero and, when the difference between the measurement of the voltage across the terminals of the output capacitor and the setpoint voltage becomes lower than zero, the determination means (52) is able to:
- set the switching frequency to a third frequency value (f_low) higher than said first frequency value (f_power) for as long as said difference in absolute value is lower than a threshold (low _threshold), and
- set the switching frequency to a second frequency value (f_cutoff) when said difference in absolute value becomes higher than said threshold, said second frequency value (f_cutoff) being designed to cut off any transfer of energy from the output capacitor to the battery.

6. Electric or hybrid motor vehicle comprising a high-voltage battery, **characterized in that** it comprises an on-board charging device according to Claim 5, able to charge the battery from an electricity supply grid.
